# EUROPEAN PATENT SPECIFICATION

(11) **EP 4 432 458 B1**
(45) Date of publication and mention of the grant of the patent: **01.04.2026**
(21) Application number: 23868580.4
(22) Date of filing: 20.09.2023
(51) Int. Cl.: H01M 50/595, H01M 50/536, G06T 7/11, G06T 7/60, H01M 10/04, H01M 50/588

(54) **BATTERY CELL PACKAGING DEVICE**
BATTERIEZELLENVERPACKUNGSVORRICHTUNG
DISPOSITIF D'ENCAPSULATION DE CELLULE DE BATTERIE

(30) Priority: 23.09.2022 KR 20220120924
(43) Date of publication of application: 18.09.2024
(73) Proprietor: LG Energy Solution, Ltd., Seoul 07335 (KR)
(72) Inventor: HONG, Seok In, Daejeon 34122 (KR); LEE, Jin Soo, Daejeon 34122 (KR); BAEK, Ju Hwan, Daejeon 34122 (KR)
(74) Representative: Plasseraud IP
(86) International application number: PCT/KR2023/014248
(87) International publication number: WO 2024/063528

(56) References cited:
- CN-A- 109 860 683
- CN-U- 217 062 420
- KR-A- 20060 014 667
- KR-B1- 101 903 367
- KR-B1- 101 927 913

## Description

### Technical Field

The present invention relates to a battery cell packaging device, and specifically, relates to a battery cell packaging device packaging a welded portion between a tab and an electrode lead of a battery cell as defined in the preamble of claim 1.

An example of such a packaging device is known from CN 109860683 A.

This application claims the benefit of priority based on Korean Patent Application No. 10-2022-0120924 dated September 23, 2022.

### Background Art

In a process of manufacturing a battery cell for an electric vehicle, after completing an electrode welding step, a process of attaching an insulating tape to the end of the battery cell is performed before completely assembling a battery cell case (e.g., pouch).

Particularly, batteries applied to electric vehicles require large capacity, so that several battery cells are gathered to be constituted in the form of a single module, insulation of electrode leads exposed from the battery cells is required to configure them in the form of the module, and for insulation of the battery cells, it is essential to attach an insulation tape thereto.

In a conventional battery cell manufacturing process, after completing a welding operation of the electrode lead, an operation of attaching a protective insulating tape to each of the upper and lower surfaces of the electrode lead is performed, and such an attaching operation is performed manually by a worker.

Specifically, the worker completed the insulating tape attachment process by attaching the insulating tape cut to a predetermined size and supplied from an insulating tape supply device to the upper surface as one side of the end of the battery cells, and then attaching the insulating tape to the lower surface as the other side manually.

However, as the conventional operation of attaching the insulating tape to the battery cells was performed manually, the adhesive force of the insulating tape attached to both sides of the end of the battery cells weakened, and simultaneously there was a high possibility that it was detached therefrom, and as meandering between the insulating tape for protecting the upper surface and the insulating tape for protecting the lower surface occurred, product defects were resulted.

In addition, since the attachment process was performed manually by the worker, the working hours were relatively longer compared to the operation of welding the electrode lead, whereby there was a problem that work productivity was lowered and the worker's workload was increased.

Recently, automated battery cell packaging devices have been actively distributed to solve problems of the insulating tape attachment process consisting of manual works.

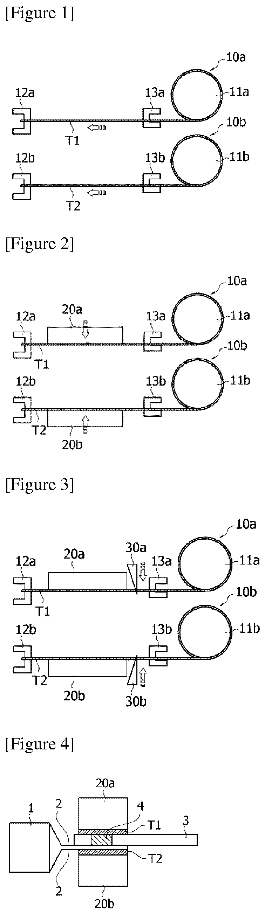

Figures 1 to 4 are diagrams for explaining a conventional battery cell packaging device. Figure 1 shows a supply process of an insulating tape, Figure 2 shows an adsorption process of an adsorption member, Figure 3 shows a cutting process of an insulating tape, and Figure 4 shows a packaging process of a welded portion.

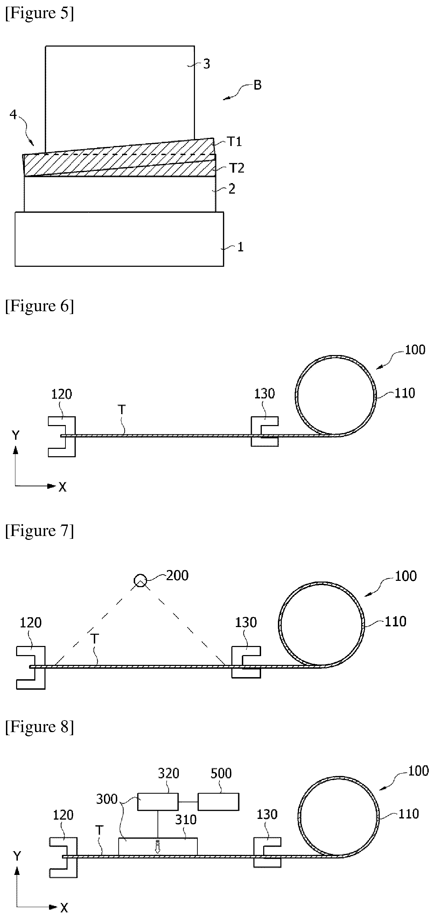

In addition, Figure 5 is a diagram for explaining tape meandering occurring in an existing battery cell packaging device.

The battery cell (B) may be, for example, a pouch-type battery cell. The battery cell (B) comprises a cell body (1), a tab (2), an electrode lead (3), and a welded portion (4) to which the tab (2) and the electrode lead (3) are attached, and the existing battery cell packaging device sequentially performs the processes of Figures 1 to 4 to package the welded portion (4) with an insulating tape.

In addition, the cell body (1) comprises an electrode assembly and a pouch surrounding the electrode assembly, and the electrode assembly comprises a plurality of positive electrodes, a plurality of negative electrodes, and a separator disposed between the positive electrode and the negative electrode, and has a structure in which the positive electrode, the separator, and the negative electrodes are alternately laminated. Furthermore, the tab (2) is electrically connected to the electrode assembly, and the tab (2) and electrode lead (3) are exposed to the outside of the pouch.

Referring to Figures 1 to 4, the conventional battery cell packaging device comprises an upper unit for attaching an upper insulating tape (T1) to the top of the welded portion (4), and a lower unit for attaching a lower insulating tape (T2) to the lower part of the welded portion (4).

Specifically, the upper unit comprises an upper supply part (10a) unwinding and supplying an upper insulating tape (T1) in one direction from an upper tape roll (11a) on which a certain amount of the upper insulating tape (T1) is wound, an upper adsorption member (20a) adsorbing the unwound and supplied upper insulating tape (T1), and an upper cutting part (30a) located between the upper adsorption member (20a) and the upper tape roll (11a), and cutting the upper insulating tape (T1) along the cutting line when the insulating tape (T1) is adsorbed. In addition, the upper supply part (10a) comprises an upper movable clamp (12a) and an upper fixed clamp (13a) for unwinding and fixing the upper insulating tape (T1) by a certain length.

Also, the lower unit comprises a lower supply part (10b) unwinding and supplying a lower insulating tape (T2) in one direction from a lower tape roll (11b) on which a certain amount of the lower insulating tape (T2) is wound, a lower adsorption member (20b) adsorbing the unwound and supplied lower insulating tape (T2), and a lower cutting part (30b) located between the lower adsorption member (20b) and the lower tape roll (11b), and cutting the lower insulating tape (T2) along the cutting line when the lower insulating tape (T2) is adsorbed. The lower supply part (10b) comprises a lower movable clamp (12b) and a lower fixed clamp (13b) for unwinding and fixing the lower insulating tape (T2) by a certain length.

Referring to Figure 4, the upper insulating tape (T1) adsorbed to the upper adsorption member (20a) is attached to the top of the welded portion (4), and the lower insulating tape (T2) adsorbed to the lower adsorption member (20b) is attached to the bottom of the welded portion (4).

Referring to Figure 5, the existing battery cell packaging device attached the insulating tape to the top and bottom of the welded portion through the upper unit and the lower unit, respectively, but the adsorption position or the attachment position of the upper and lower adsorption members (20a, 20b) was shaken during the attachment process due to mechanical defects or external shocks, so that there was a problem that tape meandering, in which the attachment positions of the upper insulating tape (T1) and the lower insulating tape (T2) were distorted, occurred.

### Disclosure

### Technical Problem

It is a problem to be solved by the present invention to provide a battery cell packaging device capable of preventing meandering of an insulating tape upon packaging by adjusting an adsorption position and an intimate attachment position of an adsorption member based on image information of the insulating tape and image information of a welded portion.

### Technical Solution

To solve the above problem, a battery cell packaging device related to one example of the present invention comprises a supply part supplying an insulating tape, an image acquisition part for photographing at least one of the insulating tape or a welded portion, an adsorption part including an adsorption member for adsorbing the supplied insulating tape and packaging the welded portion with the adsorbed insulating tape, and a cutting part for cutting the insulating tape adsorbed on the adsorption member from the supply part, wherein the adsorption member comprises a first adsorption block, and a second adsorption block foldably connected to the first adsorption block.

Also, the first adsorption block and the second adsorption block are each provided to adsorb the insulating tape.

In addition, upon folding, the adsorption surfaces of the first and second adsorption blocks may be disposed to face each other.

Furthermore, the adsorption member may be provided to maintain an unfolded state where the first adsorption block and the second adsorption block are not folded.

Also, upon packaging of the welded portion, the insulating tape adsorbed on the first adsorption block may be attached to the top of the welded portion, and the insulating tape adsorbed on the second adsorption block may be provided to be attached to the bottom of the welded portion.

In addition, the battery cell packaging device may comprise a control part for packaging the welded portion with the insulating tape adsorbed on the adsorption member by folding the adsorption member after completion of cutting.

Furthermore, the image acquisition part may be provided to acquire first image information by photographing the edge line of the insulating tape supplied from the supply part, and the control part may be provided to adjust the position of the adsorption member in an adsorption standby state based on the first image information.

Also, the control part may calculate a first angle difference (Δθ1) between the longitudinal direction edge line of the adsorption member in the adsorption standby state and the longitudinal direction edge line of the insulating tape from the first image information.

In addition, the control part may dispose the longitudinal direction edge line of the adsorption member and the longitudinal direction edge line of the insulating tape in parallel by rotating the adsorption member in the adsorption standby state by the first angle difference (Δθ1).

Furthermore, the control part may adjust the position of the adsorption member so that the longitudinal direction edge line of the adsorption member coincides with the longitudinal direction edge line of the insulating tape.

Also, the image acquisition part may be provided to acquire second image information by photographing the welded portion of the battery cell to be packaged, and the control part may adjust the position of the adsorption member for being in close contact with the welded portion based on the second image information.

In addition, the control part may be provided to calculate a second angle difference (Δθ2) between the longitudinal direction edge line of the adsorption member in an intimate attachment standby state and the longitudinal direction edge line of the welded portion from the second image information.

Furthermore, the control part may dispose the longitudinal direction edge line of the adsorption member and the longitudinal direction edge line of the welded portion in parallel by rotating the adsorption member in the intimate attachment standby state by the second angle difference (Δθ2).

Also, the control part may adjust the position of the adsorption member so that the center line of the welded portion coincides with the center line of the adsorption member.

In addition, the control part may bring the first adsorption block into close contact with the top of the welded portion, and then fold the second adsorption block so that the second adsorption block is in close contact with the bottom of the welded portion.

### Advantageous Effects

As discussed above, the battery cell packaging device related to at least one example of the present invention has the following effects.

Automation of the packaging process and device simplification are possible.

In addition, by adjusting the adsorption position of the adsorption member for adsorbing the insulating tape, and the intimate attachment position of the adsorption member for packaging the welded portion with the insulating tape adsorbed on the adsorption member based on each image information of the insulating tape and the welded portion obtained from the image acquisition part, it is possible to prevent meandering occurrence of the insulating tape.

### Description of Drawings

Figures 1 to 4 are diagrams for explaining a conventional battery cell packaging device.
Figure 5 is a diagram for explaining tape meandering occurring in an existing battery cell packaging device.
Figures 6 to 10 are diagrams for explaining a battery cell packaging device according to one example of the present invention.
Figure 11 is a diagram showing a structure of an exemplary adsorption member according to the present invention.
Figure 12 is a diagram for explaining a position adjustment process of an adsorption member in an adsorption standby state.
Figure 13 is a diagram for explaining a folding structure of an adsorption member.
Figure 14 is a diagram for explaining a position adjustment process of an adsorption member in an intimate attachment standby state.

### Best Mode

Hereinafter, a battery cell packaging device according to one example of the present invention will be described in detail with reference to the attached drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

In the entire specification, when a part "comprises" a certain component, it means that other components may be further included, rather than excluding other components, unless otherwise stated. Also, in the entire specification, when a part is "connected" or "coupled" to another part, it comprises not only a case of being "directly connected" or "directly coupled", but also a case of being connected "with another configuration interposed in the middle".

Figures 6 to 10 are diagrams for explaining a battery cell packaging device according to one example of the present invention.

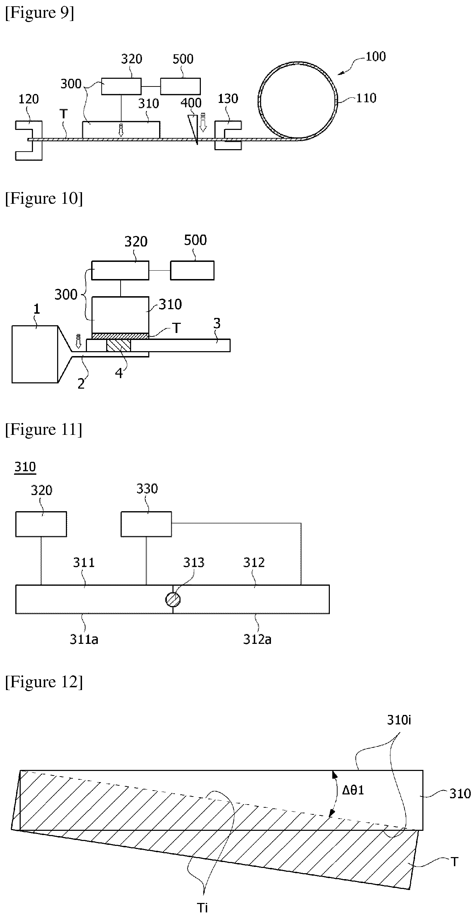

Specifically, Figure 6 shows a supply process of an insulating tape, Figure 7 shows a process of acquiring first image information through an image acquisition part, Figure 8 shows an adsorption process of an adsorption member, Figure 9 shows a cutting process of an insulating tape, and Figure 10 shows a packaging process of a welded portion.

In addition, Figure 11 is a diagram showing a structure of an exemplary adsorption member according to the present invention.

In this document, the X-axis direction represents the supply direction (also referred to as the take-out direction or traveling direction) of the insulating tape (T), and the Y-axis direction represents the up-and-down movement direction (also referred to as the elevating direction) of the adsorption member (310).

In this document, the battery cell (B) may be, for example, a pouch-type battery cell. The battery cell (B) comprises a cell body (1), a tab (2), an electrode lead (3), and a welded portion (4) to which the tab (2) and the electrode lead (3) are attached (see Figure 2).

In addition, the cell body (1) comprises an electrode assembly and a pouch surrounding the electrode assembly, and the electrode assembly comprises a plurality of positive electrodes, a plurality of negative electrodes, and a separator disposed between the positive electrode and the negative electrode, and has a structure in which the positive electrode, the separator, and the negative electrodes are alternately laminated. Furthermore, the tab (2) is electrically connected to the electrode assembly, and the tab (2) and electrode lead (3) are exposed to the outside of the pouch.

The battery cell packaging device according to one example of the present invention is provided to sequentially perform the processes shown in Figures 6 to 10, and packages the welded portion (4) with an insulating tape (T).

Referring to Figures 6 to 10, the battery cell packaging device related to one example of the present invention comprises a supply part (100) supplying an insulating tape (T), an image acquisition part (200) for photographing at least one or more of the insulating tape (T) or a welded portion (4), an adsorption part (300) including an adsorption member (310) for adsorbing the supplied insulating tape and packaging the welded portion with the adsorbed insulating tape, and a cutting part (400) for cutting the insulating tape (T) adsorbed on the adsorption member (310) from the supply part.

Referring to Figure 11, the adsorption member (300) comprises a first adsorption block (311) and a second adsorption block (312) foldably connected to the first adsorption block (311). In one example, the first adsorption block (311) and the second adsorption block (312) may each be provided to adsorb the insulating tape (T).

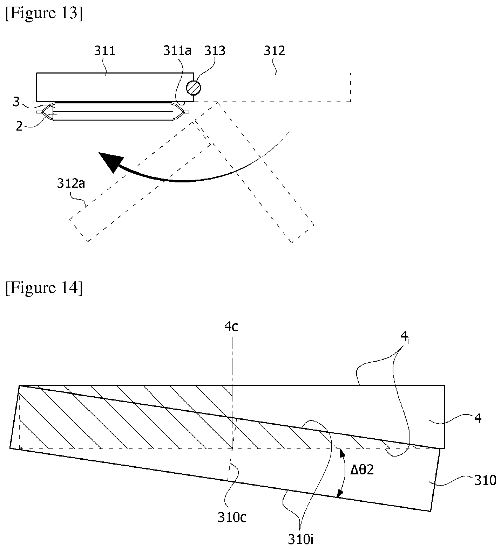

Figure 12 is a diagram for explaining a position adjustment process of an adsorption member in an adsorption standby state, Figure 13 is a diagram for explaining a folding structure of an adsorption member, and Figure 14 is a diagram for explaining a position adjustment process of an adsorption member in an intimate attachment standby state.

Referring to Figures 11 and 13, the adsorption member (300) may comprise a hinge part (313) rotatably connecting the second adsorption block (312) with respect to the first adsorption block (311) upon folding.

Also, upon folding, adsorption surfaces (311a, 312a) of the first and second adsorption blocks (311, 312) may be disposed to face each other.

In addition, the adsorption member (310) may be provided so that the first adsorption block (311) and the second adsorption block (312) maintain an unfolded state without being folded (state shown in Figure 11).

Furthermore, the position of the adsorption member (310) may be adjusted firstly before adsorbing the insulating tape (T), and the position of the adsorption member (310) may be adjusted secondarily in a state where the insulating tape (T) is adsorbed. In this way, in the process of adjusting the position of the adsorption member (310), the adsorption member (310) maintains an unfolded state where the first adsorption block (311) and the second adsorption block (312) are not folded.

In addition, after the position of the adsorption member (310) is adjusted based on the image information of the welded portion (4) in a state of adsorbing the insulating tape (T), the packaging of the welded portion (4) is performed. Thereafter, referring to Figure 13, upon packaging of the welded portion (4), the insulating tape adsorbed on the first adsorption block (311) is attached to the top of the welded portion (4), and the insulating tape adsorbed on the second adsorption block (312) is provided to be attached to the bottom of the welded portion (4).

Referring to Figures 6 to 10, an exemplary battery cell packaging device according to the present invention may comprise a supply part (100), an image acquisition part (200), an adsorption part (300), and a cutting part (400).

The supply part (100) supplies the insulating tape (T). The supply part (100) is provided to supply the insulating tape (T) from a tape roll (110) on which a certain amount of the insulating tape (T) is wound. The supply part (100) is provided to unwind the insulating tape (T) in one direction.

The supply part (100) may comprise a movable clamp (120) and a fixed clamp (130). The movable clamp (120) clamps the front end of the insulating tape (T) wound around the tape roll (110), and unwinds the insulating tape (T) while moving in a direction away from the tape roll (110).

Also, the fixed clamp (130) clamps the rear end of the insulating tape (T) unwound by a certain length to prevent it from being unwound any further. Through the movable clamp (120) and the fixed clamp (130), the supply part (100) can unwind and supply the insulating tape (T) to a certain length according to the size of the welded portion (4).

In addition, the insulating tape (T) may be composed of a sheet surface and an adhesive surface, where the adhesive surface may be a surface packaging the welded portion (4), and the sheet surface may be a surface to be adsorbed to the adsorption member (310).

The image acquisition part (200) photographs at least one or more of the insulating tape (T) or the welded portion (4). For example, the image acquisition part (200) may photograph at least one or more of the insulating tape (T) or the welded portion (4) using a vision camera. The image acquired by the image acquisition part (200) may be used to correct the adsorption position and the intimate attachment position of the adsorption member (310).

The adsorption part (300) comprises an adsorption member (310) adsorbing the supplied insulating tape (T). The adsorption member (310) may adsorb the insulating tape (T) using vacuum suction force, and the adsorption member (310) may be a porous block. The adsorption part (300) may comprise a driving part (320) moving the adsorption member (310) up, down, left, and right and rotating it at a predetermined angle. In addition, the adsorption part (300) may comprise a vacuum device (330) applying a vacuum pressure to the adsorption member (310).

In such a structure, the adsorption part (300) may allow to be adsorbed by applying a vacuum pressure to the adsorption member (310) in a state where the sheet surface of the insulating tape (T) to be adsorbed is in contact with the adsorption surface of the adsorption member (310). The vacuum pressure may be applied in a state where the sheet surface of the insulating tape (T) is in contact with the adsorption surface of the adsorption member (310), or may be applied in advance before contact. The vacuum pressure applied to the adsorption member (310) may be maintained until the adsorption member (310) is in close contact with the welded portion (4).

In addition, the cutting part (400) cuts the insulating tape (T) adsorbed on the adsorption member (310) from the tape roll (110). The cutting part (400) is located between the adsorption member (310) and the tape roll (110), and cuts the insulating tape (T) along the cutting line when the insulating tape (T) is adsorbed. The cutting part (400) may comprise a cutting blade and an elevating part moving the cutting blade up and down. While the cutting blade is lowered by the elevating part, it may cut the insulating tape (T), and when the cutting is completed, the cutting blade may be returned to its original position. The insulating tape (T) cut along the cutting line has a length capable of packaging the welded portion (4), where the length may be changed depending on the welded portion (4).

The battery cell packaging device related to an embodiment of the present invention may comprise the control part (500) for packaging the welded portion (4) of the battery cell (B) with the insulating tape (T) adsorbed on the adsorption member (310) after cutting completion.

In one embodiment, the image acquisition part (200) may be provided to acquire first image information by photographing the edge line (Ti) of the insulating tape (T) supplied from the supply part (100), and the control part (500) may adjust the position of the adsorption member (310) in the adsorption standby state based on the first image information.

The image acquisition part (200) may acquire first image information by photographing the edge line (Ti) of the insulating tape (T) using a vision camera. In addition, the image acquisition part (200) may photograph the edge line (310i) of the adsorption member (310) in the adsorption standby state, and may photograph the edge line (310i) of the member (310) in the intimate attachment standby state.

In this document, the adsorption standby state of the adsorption member means the state before adsorbing the insulating tape, and the intimate attachment standby state of the adsorption member means the state after adsorbing the insulating tape and before packaging the welded portion.

The first image information may comprise the edge lines (310i) of the adsorption member (310) in the adsorption standby state and the intimate attachment standby state. In this specification, the edge line is interpreted based on the longitudinal direction (X-axis direction), and the edge line and the longitudinal direction edge line are used with the same meaning. The first image information may be used to correct the adsorption position and the intimate attachment position of the adsorption member (310).

The adsorption standby state means the state before adsorbing the insulating tape (T), and in the adsorption standby state, the insulating tape (T) is not adsorbed on the adsorption member (310), where the adsorption member (310) in the adsorption standby state may be positioned to be apart at a predetermined distance on the sheet surface of the insulating tape (T) to be adsorbed. In this document, the position of the adsorption member (310) for adsorbing the insulating tape (T) is referred to as the "adsorption position."

The control part (500) may control the adsorption position and the intimate attachment position of the adsorption member (310) through the driving part (320) moving the adsorption member (310) up, down, left, and right and rotating it at a predetermined angle.

In addition, the control part (500) brings the adsorption surface of the adsorption member (310) into close contact with the welded portion to package the welded portion (4) with the insulating tape (T). Furthermore, if the adsorption member (310) is in close contact with the welded portion (4), the vacuum pressure applied to the adsorption member (310) may be relieved.

Referring to Figure 12, the control part (500) may calculate a first angle difference (Δθ1) between the longitudinal direction edge line (310i) of the adsorption member (310) in the adsorption standby state and the longitudinal direction edge line (Ti) of the insulating tape (T) from the first image information.

While the insulating tape (T) is unwound from the tape roll, there are cases where the insulating tape (T) does not unwind in a straight line but releases obliquely due to various external factors, where the insulating tape (T) thus unwound may cause a situation that the front and rear ends do not lie in a straight line, and are distorted at a predetermined angle. As the degree of distortion of the insulating tape (T) increases, the first angle difference (Δθ1) increases. If the insulating tape (T) thus distorted is adsorbed as it is and the welded portion (4) is packaged, the tape meandering may occur.

Also, the control part (500) rotates the position of the adsorption member (310) before adsorption by the first angle difference (Δθ1) to be placed at the correct adsorption position, whereby it is possible to prevent the tape meandering.

In the adsorption standby state of the adsorption member (310), the correct adsorption position may be in a state where the longitudinal direction edge (310i) of the adsorption member (310) coincides with the longitudinal direction edge line (Ti) of the insulating tape (T), where the first angle difference (Δθ1) may be close to '0'.

In one example, the control part (500) may rotate the adsorption member (310) in the adsorption standby state by the first angle difference (Δθ1) to dispose the longitudinal direction edge line (310i) of the adsorption member (310) and the longitudinal direction edge line (Ti) of the tape (T) in parallel.

In the present invention, the correct adsorption position means that the longitudinal direction edge line (310i) of the adsorption member (310) and the longitudinal direction edge line (Ti) of the insulating tape (T) are disposed in parallel, and conversely, the incorrect adsorption position means that the longitudinal direction edge line (310i) of the adsorption member (310) and the longitudinal direction edge line (Ti) of the insulating tape (T) are not disposed in parallel.

The battery cell packaging device according to the present invention can correct the incorrect adsorption position of the adsorption member (310) in the adsorption standby state to the correct adsorption position using the first image information.

Meanwhile, in the present invention, it is possible to attach the insulating tape (T) to the top and the bottom of the welded portion (4) by the foldable and unfoldable adsorption member (310). That is, simplification is possible in terms of the device compared to the existing battery cell packaging device packaging the welded portion (4) through the upper unit and lower unit.

Referring to Figure 13, the adsorption member (310) according to the present invention may comprise a first adsorption block (311) and a second adsorption block (312) foldably connected to the first adsorption block (311), and upon folding, the adsorption surfaces of the first and second adsorption blocks (311, 312) may be disposed to face each other. The adsorption surface means one side to which the insulating tape (T) is adsorbed.

As shown in Figure 13, while the adsorption surface of the second adsorption block (312) is folded in a direction closer to the adsorption surface of the first adsorption block (311) upon folding, the adsorption surfaces of the first and second adsorption blocks (311, 312) may face each other. The adsorption member (310) in the adsorption standby state may be in a state where the first adsorption block (311) and the second adsorption block (312) are unfolded without being folded. As shown in Figure 11, in the unfolded state, the first and second adsorption blocks (311, 312) may be unfolded in the form that their respective adsorption surfaces form approximately the same plane.

In one example, the insulating tape (T) adsorbed on the first adsorption block (311) may be attached to the top of the welded portion (4), and the insulating tape (T) adsorbed on the second adsorption block (312) may be attached to the bottom of the welded portion (4).

In such a structure, the upper packaging to package the top of the welded portion (4) and the lower packaging to package the bottom of the welded portion (4) may be performed sequentially.

For example, the control part (500) may bring the first adsorption block (311) into close contact with the top of the welded portion (4) and then fold the second adsorption block (312) so that the second adsorption block (312) is in close contact with to the bottom of the welded portion (4). In detail, the control part (500) may complete the upper packaging by bringing the adsorption surface of the first adsorption block (311), on which the insulating tape (T) is adsorbed, into close contact with the top of the welded portion (4), and may complete the upper packaging by bringing the adsorption surface of the second adsorption block (312), on which the insulating tape (T) is adsorbed, into close contact with the bottom of the welded portion (4) through folding.

Meanwhile, even if the position of the adsorption member (310) is adjusted to the correct adsorption position based on the first image information, in the case where the intimate attachment position of the adsorption member (310) does not exactly match the welded portion (4) to be packaged, the tape meandering may occur. Accordingly, the additional adjustment of the intimate attachment position of the adsorption member (310) during the packaging process may be more effective in preventing the tape meandering.

Accordingly, the battery cell packaging device according to the present invention can more effectively prevent the tape meandering by adjusting the position of the adsorption member (310) before packaging the welded portion. The primary position adjustment may be adjustment of the adsorption position of the adsorption member (310) using the first image information, and the secondary position adjustment may be adjustment of the intimate attachment position of the adsorption member (310) using the second image information.

Specifically, the image acquisition part (200) may be provided to acquire the second image information by photographing the welded portion (4) of the battery cell (B) to be packaged, and the control part (500) may adjust the position of the adsorption member (310) for being in close contact with the welded portion (4) based on the second image information.

The image acquisition part (200) may comprise a first photographing device photographing the first image information and a second photographing device photographing the second image information. The first and second photographing devices may be independent devices, or a single device may photograph first and second image information, respectively.

Referring to Figure 14, the control part (500) may adjust the position of the adsorption member (310) in the intimate attachment standby state based on the second image information. The intimate attachment standby state may be a state before the insulating tape adsorbed on the adsorption member is brought into close contact with the welded portion, and the adsorption member in the intimate attachment standby state may be positioned at a certain distance away from the welded portion in a state where the insulating tape is adsorbed. The position of the adsorption member (310) for being in close contact with the welded portion (4) is referred to as the "intimate attachment position."

The control part (500) may calculate a second angle difference (Δθ2) between the longitudinal direction edge line (310i) of the adsorption member (310) in the intimate attachment standby state and the longitudinal direction edge line (4i) of the welded portion (4) from the second image information.

The control part (500) may dispose the longitudinal direction edge line (310i) of the adsorption member (310) and the longitudinal direction edge line (4i) of the welded portion (4) in parallel by rotating the adsorption member (310) in the intimate attachment standby state by the second angle difference (Δθ2).

In one example, the control part (500) may adjust the position of the adsorption member (310) (or also referred to as the 'intimate attachment position') so that the center line (4c) of the welded portion (4) and the center line (310c) of the adsorption member (310) coincide. In the second image information, the center line (310c) of the adsorption member (310) in the intimate attachment state and the center line (4c) of the welded portion (4) may be included. The center line (4c) of the welded portion (4) means a line passing through the center while being perpendicular to the longitudinal direction of the welded portion (4), and the center line (310c) of the adsorption member (310) means a line passing through the center while being perpendicular to the longitudinal direction of the adsorption member.

Various external factors may cause a situation that in the intimate attachment standby state of the adsorption member (310), the adsorption member (310) is distorted obliquely with respect to the welded portion (4). As the degree of distortion increases, the second angle difference (Δθ2) increases. If the adsorption member (310) is in close contact with the welded portion (4) in such a distortion state, the tape meandering may occur. The control part (500) rotates the position of the adsorption member (310) before the intimate attachment by the second angle difference (Δθ2) to be placed in the correct intimate attachment position, whereby it is possible to prevent the tape meandering.

The battery cell packaging device according to the present invention may determine in advance the position of the adsorption member (310) with respect to the welded portion in the intimate attachment standby state through the second image information, and may adjust the position of the adsorption member (310) by the above-described method so that if the adsorption member (310) is placed in the wrong position, the intimate attachment position of the adsorption member (310) is placed in the correct position.

In the present invention, the correct intimate attachment position may mean a position where the longitudinal direction edge line (310i) of the adsorption member (310) and the longitudinal direction edge line (4i) of the welded portion (4) are parallel, and the center line (310c) of the adsorption member (310) coincides with the center line (4c) of the welded portion (4). Conversely, the incorrect intimate attachment position may mean a position where the longitudinal direction edge line (310i) of the adsorption member (310) and the longitudinal direction edge line (4i) of the welded portion (4) are not parallel, and the center line (310c) of the adsorption member (310) does not coincide with the center line (4c) of the welded portion (4).

In the intimate attachment standby state of the adsorption member (310), the correct contact position is disposed such that the center line (310c) of the adsorption member (310) coincides with the center line (4c) of the welded portion (4), and is disposed such that the longitudinal direction edge line (310i) of the adsorption member (310) and the longitudinal direction edge line (4i) of the welded portion (4) are parallel, where the second angle difference (Δθ2) may be close to '0'.

The battery cell packaging device according to the present invention may correct the intimate attachment position of the adsorption member (310) in the intimate attachment standby state using the second image information.

In addition, the correction of the intimate attachment position may be performed on the first adsorption block (311) in the unfolded state.

Meanwhile, the present application relates to a battery cell packaging device packaging a welded portion between a tab and an electrode lead of another battery cell.

The battery cell packaging device comprises a supply part (100), an image acquisition part (200), an adsorption part (300), and a cutting part (400). Since the detailed descriptions of the respective components overlap with the above-described contents, they will be omitted below.

The battery cell packaging device comprises a supply part (100) supplying an insulating tape, an image acquisition part (200) acquiring second image information by photographing a welded portion of the battery cell to be packaged, an adsorption part (300) including an adsorption member (310) for adsorbing the supplied insulating tape (T), and packaging the welded portion with the adsorbed insulating tape, and a cutting part (400) for cutting the insulating tape (T) adsorbed on the adsorption member (310) from the supply part (100).

Also, the battery cell packaging device may comprise a control part (500) allowing to package the welded portion with the insulating tape adsorbed on the adsorption member after completion of cutting.

In addition, the control part (500) may adjust the position of the adsorption member (310) for being in close contact with the welded portion (4) based on the second image information.

The control part (500) may calculate a second angle difference (Δθ2) between the longitudinal direction edge line (310i) of the adsorption block (310) in the intimate attachment standby state and the longitudinal direction edge line (4i) of the welded portion (4) from the second image information.

The control part (500) may adjust the intimate attachment position of the adsorption block (310) by rotating the adsorption block (310) in the intimate attachment standby state by the second angle difference (Δθ2).

In addition, the control part (500) may adjust the intimate attachment position of the adsorption member (310) so that the center line (4c) of the welded portion (4) coincides with the center line (310c) of the adsorption block (310).

The adsorption member (310) may comprise a first adsorption block (311) and a second adsorption block (312) foldably connected to the first adsorption block (311), and upon folding, adsorption surfaces of the first and second adsorption blocks (311, 312) may be disposed to face each other.

In one example, the insulating tape adsorbed on the first adsorption block (311) may be attached to the top of the welded portion (4), and the insulating tape adsorbed on the second adsorption block (312) may be attached to the bottom of the welded portion (4).

The control part (500) may bring the first adsorption block (311) into close contact with the top of the welded portion (4), and then may fold the second adsorption block (312) so that the second adsorption block (312) is in close contact with the bottom of the welded portion (4).

The preferred examples of the present invention as described above have been disclosed for illustrative purposes, and those skilled in the art having ordinary knowledge of the present invention will be able to make various modifications, changes, and additions within the scope of the following claims.

## Claims

1. A battery cell packaging device packaging a welded portion (4) between a tab (2) and an electrode lead (3) of a battery cell (B), comprising:
a supply part (100) supplying an insulating tape (T);
an image acquisition part (200) for photographing at least one of the insulating tape( T) or a welded portion (4);
an adsorption part (300) including an adsorption member (310) for adsorbing the supplied insulating tape (T) and packaging the welded portion (4) with the adsorbed insulating tape (T); and
a cutting part (40) for cutting the insulating tape (T) adsorbed on the adsorption member (310) from the supply part (100), **characterised in that**
the adsorption member (310) comprises a first adsorption block (311), and a second adsorption block (312) foldably connected to the first adsorption block (311).

2. The battery cell packaging device according to claim 1, wherein
the first adsorption block (311) and the second adsorption block (312) are each provided to adsorb the insulating tape (T).

3. The battery cell packaging device according to claim 2, wherein
upon folding, the adsorption surfaces (311a, 312a) of the first and second adsorption blocks (311, 312) are disposed to face each other.

4. The battery cell packaging device according to claim 2, wherein
the adsorption member (310) is provided to maintain an unfolded state where the first adsorption block (311) and the second adsorption block (312) are not folded.

5. The battery cell packaging device according to claim 2, wherein
upon packaging of the welded portion (4), the insulating tape (T) adsorbed on the first adsorption block (311) is attached to the top of the welded portion (4), and the insulating tape (T) adsorbed on the second adsorption block (312) is provided to be attached to the bottom of the welded portion (4).

6. The battery cell packaging device according to claim 1, comprising
a control part (500) for packaging the welded portion (4) with the insulating tape (T) adsorbed on the adsorption member (310) by folding the adsorption member (310) after completion of cutting.

7. The battery cell packaging device according to claim 6, wherein
the image acquisition part (200) is provided to acquire first image information by photographing the edge line (Ti) of the insulating tape (T) supplied from the supply part (100), and
the control part (500) is provided to adjust the position of the adsorption member (310) in an adsorption standby state based on the first image information.

8. The battery cell packaging device according to claim 7, wherein the control part (500) calculates a first angle difference (Δθ1) between the longitudinal direction edge line (310i) of the adsorption member (310) in the adsorption standby state and the longitudinal direction edge line (Ti) of the insulating tape (T) from the first image information.

9. The battery cell packaging device according to claim 8, wherein the control part (500) disposes the longitudinal direction edge line (310i) of the adsorption member (310) and the longitudinal direction edge line (Ti) of the insulating tape (T) in parallel by rotating the adsorption member (310) in the adsorption standby state by the first angle difference (Δθ1).

10. The battery cell packaging device according to claim 9, wherein the control part (500) adjusts the position of the adsorption member (310) so that the longitudinal direction edge line (310i) of the adsorption member (310) coincides with the longitudinal direction edge line (Ti) of the insulating tape (T).

11. The battery cell packaging device according to claim 6, wherein the image acquisition part (200) is provided to acquire second image information by photographing the welded portion (4) of the battery cell (B) to be packaged, and
the control part (500) adjusts the position of the adsorption member (310) for being in close contact with the welded portion (4) based on the second image information.

12. The battery cell packaging device according to claim 11, wherein the control part (500) calculates a second angle difference (Δθ2) between the longitudinal direction edge line (310i) of the adsorption member (310) in an intimate attachment standby state and the longitudinal direction edge line (4i) of the welded portion (4) from the second image information.

13. The battery cell packaging device according to claim 12, wherein the control part (500) disposes the longitudinal direction edge line (310i) of the adsorption member (310) and the longitudinal direction edge line (4i) of the welded portion (4) in parallel by rotating the adsorption member (310) in the intimate attachment standby state by the second angle difference (Δθ2).

14. The battery cell packaging device according to claim 13, wherein the control part (500) adjusts the position of the adsorption member (310) so that the center line (4c) of the welded portion (4) coincides with the center line of the adsorption member (310).

15. The battery cell packaging device according to claim 14, wherein the control part (500) brings the first adsorption block (311) into close contact with the top of the welded portion (4), and then folds the second adsorption block (312) so that the second adsorption block is in close contact with the bottom of the welded portion (4).

## Patentansprüche

1. Batteriezellen-Verpackungsvorrichtung, welche einen geschweißten Abschnitt (4) zwischen einem Streifen (2) und einer Elektrodenleitung (3) einer Batteriezelle (B) verpackt, umfassend:
einen Zuführteil (100), welcher ein isolierendes Band (T) zuführt;
einen Bildaufnahme-Teil (200) zum Fotografieren von wenigstens einem aus dem isolierenden Band (T) oder einem geschweißten Abschnitt (4);
einen Adsorptionsteil (300), welcher ein Adsorptionselement (310) zum Adsorbieren des zugeführten isolierenden Bands (T) und Verpacken des geschweißten Abschnitts (4) mit dem adsorbierten isolierenden Band (T) umfasst; und
einen Schneidteil (40) zum Schneiden des isolierenden Bands (T), welches an dem Adsorptionselement (310) adsorbiert ist, von dem Zuführteil (100),
**dadurch gekennzeichnet, dass** das Adsorptionselement (310) einen ersten Adsorptionsblock (311) und einen zweiten Adsorptionsblock (312) umfasst, welcher faltbar mit dem ersten Adsorptionsblock (311) verbunden ist.

2. Batteriezellen-Verpackungsvorrichtung nach Anspruch 1, wobei
der erste Adsorptionsblock (311) und der zweite Adsorptionsblock (312) jeweils dazu bereitgestellt sind, das isolierende Band (T) zu adsorbieren.

3. Batteriezellen-Verpackungsvorrichtung nach Anspruch 2, wobei
auf ein Falten hin die Adsorptionsflächen (311a, 312a) der ersten und zweiten Adsorptionsblöcke (311, 312) dazu angeordnet sind, zueinander zu weisen.

4. Batteriezellen-Verpackungsvorrichtung nach Anspruch 2, wobei
das Adsorptionselement (310) dazu bereitgestellt ist, einen ungefalteten Zustand beizubehalten, in welchem der erste Adsorptionsblock (311) und der zweite Adsorptionsblock (312) nicht gefaltet sind.

5. Batteriezellen-Verpackungsvorrichtung nach Anspruch 2, wobei
auf ein Verpacken des geschweißten Abschnitts (4) hin das isolierende Band (T), welches an dem ersten Adsorptionsblock (311) adsorbiert ist, an der Oberseite des geschweißten Abschnitts (4) angebracht ist, und das isolierende Band (T), welches an dem zweiten Adsorptionsblock (312) adsorbiert ist, dazu bereitgestellt ist, an der Unterseite des geschweißten Abschnitts (4) angebracht zu sein.

6. Batteriezellen-Verpackungsvorrichtung nach Anspruch 1, umfassend:
einen Steuerteil (500) zum Verpacken des geschweißten Abschnitts (4) mit dem isolierenden Band (T), welches an dem Adsorptionselement (310) adsorbiert ist, durch Falten des Adsorptionselements (310) nach dem Abschließen des Schneidens.

7. Batteriezellen-Verpackungsvorrichtung nach Anspruch 6, wobei
der Bildaufnahme-Teil (200) dazu bereitgestellt ist, erste Bildinformationen durch Fotografieren der Randlinie (Ti) des isolierenden Bands (T) aufzunehmen, welches von dem Zuführteil (100) zugeführt wird, und
der Steuerteil (500) dazu bereitgestellt ist, die Position des Adsorptionselements (310) in einem Adsorption-Standby-Zustand auf Grundlage der ersten Bildinformationen anzupassen.

8. Batteriezellen-Verpackungsvorrichtung nach Anspruch 7, wobei der Steuerteil (500) eine erste Winkeldifferenz (Δθ1) zwischen der Randlinie in longitudinaler Richtung (310i) des Adsorptionselements (310) in dem Adsorption-Standby-Zustand und der Randlinie in longitudinaler Richtung (Ti) des isolierenden Bands (T) aus den ersten Bildinformationen berechnet.

9. Batteriezellen-Verpackungsvorrichtung nach Anspruch 8, wobei der Steuerteil (500) die Randlinie in longitudinaler Richtung (310i) des Adsorptionselements (310) und die Randlinie in longitudinaler Richtung (Ti) des isolierenden Bands (T) parallel anordnet, indem das Adsorptionselement (310) in dem Adsorption-Standby-Zustand um die erste Winkeldifferenz (Δθ1) rotiert wird.

10. Batteriezellen-Verpackungsvorrichtung nach Anspruch 9, wobei der Steuerteil (500) die Position des Adsorptionselements (310) derart anpasst, dass die Randlinie in longitudinaler Richtung (310i) des Adsorptionselements (310) mit der Randlinie in longitudinaler Richtung (Ti) des isolierenden Bands (T) zusammenfällt.

11. Batteriezellen-Verpackungsvorrichtung nach Anspruch 6, wobei der Bildaufnahme-Teil (200) dazu bereitgestellt ist, zweite Bildinformationen durch Fotografieren des geschweißten Abschnitts (4) der zu verpackenden Batteriezelle (B) aufzunehmen, und
der Steuerteil (500) die Position des Adsorptionselements (310) anpasst, um in engem Kontakt mit dem geschweißten Abschnitt (4) zu sein, auf Grundlage der zweiten Bildinformationen.

12. Batteriezellen-Verpackungsvorrichtung nach Anspruch 11, wobei der Steuerteil (500) eine zweite Winkeldifferenz (Δθ2) zwischen der Randlinie in longitudinaler Richtung (310i) des Adsorptionselements (310) in einem intimen Anbringung-Standby-Zustand und der Randlinie in longitudinaler Richtung (4i) des geschweißten Abschnitts (4) aus den zweiten Bildinformationen berechnet.

13. Batteriezellen-Verpackungsvorrichtung nach Anspruch 12, wobei der Steuerteil (500) die Randlinie in longitudinaler Richtung (310i) des Adsorptionselements (310) und die Randlinie in longitudinaler Richtung (4i) des geschweißten Abschnitts (4) parallel anordnet, indem das Adsorptionselement (310) in dem intimen Anbringung-Standby-Zustand um die zweite Winkeldifferenz (Δθ2) rotiert wird.

14. Batteriezellen-Verpackungsvorrichtung nach Anspruch 13, wobei der Steuerteil (500) die Position des Adsorptionselements (310) derart anpasst, dass die Mittellinie (4c) des geschweißten Abschnitts (4) mit der Mittellinie des Adsorptionselements (310) zusammenfällt.

15. Batteriezellen-Verpackungsvorrichtung nach Anspruch 14, wobei der Steuerteil (500) den ersten Adsorptionsblock (311) in engen Kontakt mit der Oberseite des geschweißten Abschnitts (4) bringt und dann den zweiten Adsorptionsblock (312) derart faltet, dass der zweite Adsorptionsblock in engem Kontakt mit der Unterseite des geschweißten Abschnitts (4) ist.

## Revendications

1. Dispositif d'encapsulation de cellule de batterie encapsulant une portion soudée (4) entre une languette (2) et un fil d'électrode (3) d'une cellule de batterie (B), comprenant :
une partie de fourniture (100) fournissant un ruban isolant (T) ;
une partie d'acquisition d'image (200) pour photographier au moins un parmi le ruban isolant (T) ou une portion soudée (4) ;
une partie d'adsorption (300) comprenant un élément d'adsorption (310) pour adsorber le ruban isolant (T) fourni et encapsuler la portion soudée (4) avec le ruban isolant (T) adsorbé ; et
une partie de découpe (40) pour découper le ruban isolant (T) adsorbé sur l'élément d'adsorption (310) à partir de la partie de fourniture (100), **caractérisé en ce que**
l'élément d'adsorption (310) comprend un premier bloc d'adsorption (311), et un second bloc d'adsorption (312) relié de manière pliable au premier bloc d'adsorption (311).

2. Dispositif d'encapsulation de cellule de batterie selon la revendication 1, dans lequel
le premier bloc d'adsorption (311) et le second bloc d'adsorption (312) sont chacun prévus pour adsorber le ruban isolant (T).

3. Dispositif d'encapsulation de cellule de batterie selon la revendication 2, dans lequel
lors du pliage, les surfaces d'adsorption (311a, 312a) des premier et second blocs d'adsorption (311, 312) sont disposées pour se faire face l'une l'autre.

4. Dispositif d'encapsulation de cellule de batterie selon la revendication 2, dans lequel
l'élément d'adsorption (310) est prévu pour maintenir un état déplié lorsque le premier bloc d'adsorption (311) et le second bloc d'adsorption (312) ne sont pas pliés.

5. Dispositif d'encapsulation de cellule de batterie selon la revendication 2, dans lequel
lors de l'encapsulation de la portion soudée (4), le ruban isolant (T) adsorbé sur le premier bloc d'adsorption (311) est fixé au dessus de la portion soudée (4), et le ruban isolant (T) adsorbé sur le second bloc d'adsorption (312) est prévu pour être fixé au dessous de la portion soudée (4).

6. Dispositif d'encapsulation de cellule de batterie selon la revendication 1, comprenant
une partie de commande (500) pour encapsuler la portion soudée (4) avec le ruban isolant (T) adsorbé sur l'élément d'adsorption (310) en pliant l'élément d'adsorption (310) après la fin de la découpe.

7. Dispositif d'encapsulation de cellule de batterie selon la revendication 6, dans lequel
la partie d'acquisition d'image (200) est prévue pour acquérir des premières informations d'image en photographiant la ligne de bord (Ti) du ruban isolant (T) fourni à partir de la partie de fourniture (100), et
la partie de commande (500) est prévue pour ajuster la position de l'élément d'adsorption (310) dans un état d'attente d'adsorption sur la base des premières informations d'image.

8. Dispositif d'encapsulation de cellule de batterie selon la revendication 7, dans lequel la partie de commande (500) calcule une première différence d'angle (Δθ1) entre la ligne de bord (310i) de direction longitudinale de l'élément d'adsorption (310) dans l'état d'attente d'adsorption et la ligne de bord (Ti) de direction longitudinale du ruban isolant (T) à partir des premières informations d'image.

9. Dispositif d'encapsulation de cellule de batterie selon la revendication 8, dans lequel la partie de commande (500) dispose la ligne de bord (310i) de direction longitudinale de l'élément d'adsorption (310) et la ligne de bord (Ti) de direction longitudinale du ruban isolant (T) en parallèle en faisant tourner l'élément d'adsorption (310) dans l'état d'attente d'adsorption suivant la première différence d'angle (Δθ1).

10. Dispositif d'encapsulation de cellule de batterie selon la revendication 9, dans lequel la partie de commande (500) ajuste la position de l'élément d'adsorption (310) de façon à ce que la ligne de bord (310i) de direction longitudinale de l'élément d'adsorption (310) coïncide avec la ligne de bord (Ti) de direction longitudinale du ruban isolant (T).

11. Dispositif d'encapsulation de cellule de batterie selon la revendication 6, dans lequel la partie d'acquisition d'image (200) est prévue pour acquérir des secondes informations d'image en photographiant la portion soudée (4) de la cellule de batterie (B) devant être encapsulée, et
la partie de commande (500) ajuste la position de l'élément d'adsorption (310) pour qu'il soit en contact étroit avec la portion soudée (4) sur la base des secondes informations d'image.

12. Dispositif d'encapsulation de cellule de batterie selon la revendication 11, dans lequel la partie de commande (500) calcule une seconde différence d'angle (Δθ2) entre la ligne de bord (310i) de direction longitudinale de l'élément d'adsorption (310) dans un état d'attente de fixation intime et la ligne de bord (4i) de direction longitudinale de la portion soudée (4) à partir des secondes informations d'image.

13. Dispositif d'encapsulation de cellule de batterie selon la revendication 12, dans lequel la partie de commande (500) dispose la ligne de bord (310i) de direction longitudinale de l'élément d'adsorption (310) et la ligne de bord (4i) de direction longitudinale de la portion soudée (4) en parallèle en faisant tourner l'élément d'adsorption (310) dans l'état d'attente de fixation intime suivant la seconde différence d'angle (Δθ2).

14. Dispositif d'encapsulation de cellule de batterie selon la revendication 13, dans lequel la partie de commande (500) ajuste la position de l'élément d'adsorption (310) de façon à ce que la ligne centrale (4c) de la portion soudée (4) coïncide avec la ligne centrale de l'élément d'adsorption (310).

15. Dispositif d'encapsulation de cellule de batterie selon la revendication 14, dans lequel la partie de commande (500) amène le premier bloc d'adsorption (311) en contact étroit avec le dessus de la portion soudée (4), et plie ensuite le second bloc d'adsorption (312) de façon à ce que le second bloc d'adsorption soit en contact étroit avec le dessous de la portion soudée (4).
